# EUROPEAN PATENT APPLICATION

(11) **EP 4 741 028 A1**
(43) Date of publication of application: **13.05.2026**
(21) Application number: 24847498.3
(22) Date of filing: 15.01.2024
(51) Int. Cl.: A63F 13/52, A63F 13/537, A63F 13/55

(54) **VIRTUAL SCENE ADJUSTMENT METHOD AND APPARATUS, AND RELATED DEVICE**

(30) Priority: 02.08.2023 CN 202310966763; 17.10.2023 CN 202311344341
(71) Applicant: Huawei Cloud Computing Technologies Co., Ltd., Guiyang, Guizhou, 550025 (CN)
(72) Inventor: CHEN, Pu, Guiyang, Guizhou 550025 (CN); WU, Lilei, Guiyang, Guizhou 550025 (CN)
(74) Representative: Pfenning, Meinig & Partner mbB
(86) International application number: PCT/CN2024/072297
(87) International publication number: WO 2025/025527

(57) **Abstract**

A virtual scene adjustment method is provided. In the method, a data exchange platform obtains status data that is of a first object and that is sent by a first device. The first object is an environmental object in a real scene or an item included in the real scene. The data exchange platform sends the status data of the first object to a second device. The second device obtains the status data of the first object, and adjusts, based on the status data of the first object, a second object that is included in a virtual scene and that corresponds to the first object.

## Description

This application claims priority to Chinese Patent Application No. 202310966763.0, filed with the China National Intellectual Property Administration on August 2, 2023 and entitled "METHOD AND APPARATUS FOR INTERACTION BETWEEN VIRTUAL SCENE AND IOT DEVICE", which is incorporated herein by reference in its entirety. In addition, this application claims priority to Chinese Patent Application No. 202311344341.6, filed with the China National Intellectual Property Administration on October 17, 2023 and entitled "VIRTUAL SCENE ADJUSTMENT METHOD AND APPARATUS, AND RELATED DEVICE", which is incorporated herein by reference in its entirety.

### TECHNICAL FIELD

This application relates to the field of data processing, and in particular, to a virtual scene adjustment method and apparatus, and a related device.

### BACKGROUND

A virtual scene is a scene generated by using a computer and used for simulating a real scene. A user can view and interact with the virtual scene by using a display device, for example, a display, a projector, or a virtual reality (Virtual Reality, VR) device.

Currently, when viewing the virtual scene by using the display device in the real scene, the user can clearly perceive a visual difference between the virtual scene displayed by the display device and the real scene. The visual difference between the virtual scene and the real scene is caused by poor coordination between the virtual scene and the real scene as the virtual scene and the real scene are not well integrated. The visual difference between the virtual scene and the real scene affects interaction between the user and the virtual scene, resulting in poor user experience.

### SUMMARY

Embodiments of this application provide a virtual scene adjustment method and apparatus, and a related device. A data exchange platform sends status data of an environmental object or an item in a real scene to a device that processes a virtual scene, so that the device that processes the virtual scene synchronously adjusts an environmental object or an item in the virtual scene based on the status data. In this way, a visual difference between the virtual scene and the real scene is reduced, and the virtual scene and the real scene are better integrated.

According to a first aspect, this application provides a virtual scene adjustment method, and the method is applied to a data exchange platform. The data exchange platform is separately connected to a first device and a second device. The first device is configured to process status data of a first object included in a real scene. The first object is an environmental object or an item in a real scene. The second device is configured to process a virtual scene displayed in the real scene. The data exchange platform obtains the status data that is of the first object and that is sent by the first device, and sends the status data of the first object to the second device. The second device can adjust, based on the status data of the first object, the second object corresponding to the first object included in the virtual scene. In this way, the second object in the virtual scene can be synchronously adjusted based on the status data of the first object, so that the displayed second object is better integrated with the real scene, to reduce a difference between the displayed virtual scene and the real scene.

In a possible implementation, the first device is a collection device. The status data of the first object is original status data obtained by the collection device through collection for the first object. In this way, the second object can be adjusted by using the original status data for the first object, processing on the status data of the first object is reduced, and adjustment efficiency is improved.

In a possible implementation, the first device is a computing device, and the computing device is connected to a collection device. The status data of the first object is an attribute parameter obtained by the computing device by processing original status data. The original status data is obtained by the collection device through collection for the first object. The original status data is processed, so that a data amount of data that needs to be transmitted can be reduced, and the data exchange platform transmits data.

In a possible implementation, the attribute parameter is an object attribute parameter of the first object. The object attribute parameter is used for describing an attribute of the first object. In another possible implementation, the attribute parameter is a device attribute parameter of a virtual device. The device attribute parameter of the virtual device is used for adjusting, in the virtual scene, a virtual device used for controlling the second object. The device attribute parameter is used for adjusting the virtual device for controlling the second object, to enrich manners of adjusting the second object, and facilitate adjustment of the second object.

In a possible implementation, the first device is a first control device. The first control device is configured to control the first object. The status data of the first object is control data generated by the control device for the first object. In this way, the second object can be adjusted by using the control data for controlling the first object, to improve efficiency of adjusting the second object.

In a possible implementation, the data exchange platform further obtains status data that is of the second object and that is sent by the second device. The data exchange platform sends the status data of the second object to the first device. The status data of the second object indicates the first control device to adjust the first object. In this way, when the second object in the virtual scene is adjusted, the first object in the real scene can be accordingly adjusted, so that a visual difference between the virtual scene and the real scene is reduced, and a degree of integration between the virtual scene and the real scene is improved.

In a possible implementation, the first device is a second control device. The second control device is configured to control the second object. The data exchange platform further obtains status data that is of the second object and that is sent by the first device, and sends the status data of the second object to the second device. The status data of the second object is used for adjusting the second object included in the virtual scene. The second control device is used, so that the second object in the virtual scene can be directly adjusted by using a device in the real scene, to facilitate adjustment of the second object.

In a possible implementation, the data exchange platform is an internet of things IoT platform.

According to a second aspect, this application provides a virtual scene adjustment method. The method is applied to a second device. The second device is connected to a data exchange platform. The second device obtains status data that is of a first object and that is sent by the data exchange platform. The first object is an environmental object in a real scene or an item included in the real scene. The second device adjusts, based on the status data of the first object, a second object included in a virtual scene. The second object corresponds to the first object, and an adjusted virtual scene is used for being displayed in the real scene. The second device can adjust the second object in the virtual scene based on the obtained status data of the first object in the real scene. In this way, the virtual scene can be adjusted based on the real scene, so that the virtual scene is better integrated with the real scene, to reduce a visual difference between the virtual scene displayed in the real scene and the real scene.

In a possible implementation, the second device adjusts the second object based on the status data of the first object, and renders the virtual scene based on an adjusted second object. The second object can be directly adjusted based on the status data of the first object. Further, the status data of the first object is original status data obtained through collection for the first object, or is an object attribute parameter of the first object.

In a possible implementation, the second device adjusts, based on the status data of the first object, a virtual device used for controlling the second object. The virtual device is in the virtual scene. The second device renders the virtual scene by using an adjusted virtual device. In this way, the second object can be adjusted by adjusting the virtual device for controlling the second object, to enrich manners of adjusting the second object. Further, status data of the first object is one of a device attribute parameter of the virtual device, original status data obtained through collection for the first object, and control data for the first object.

In a possible implementation, the data exchange platform is further connected to a first control device included in the real scene. The first control device is configured to control the first object. The second device obtains status data of the second object, and sends the status data of the second object to the data exchange platform. The status data of the second object indicates the first control device to adjust the first object. In this way, the first object in the real scene can be adjusted based on the status data of the second object, so that the virtual scene is better integrated with the real scene, to reduce a visual difference between the virtual scene displayed in the real scene and the real scene.

In a possible implementation, the data exchange platform is further connected to a second control device included in the real scene. The second control device is configured to control the second object. The second device obtains status data that is of the second object, that is generated by the second control device, and that is sent by the data exchange platform, and adjusts, based on the status data of the second object, the second object included in the virtual scene. In this way, the second control device is used, so that the second object in the virtual scene can be directly adjusted by using a device in the real scene, to facilitate adjustment of the second object.

In a possible implementation, the data exchange platform is an internet of things IoT platform.

According to a third aspect, this application provides a virtual scene adjustment apparatus. The apparatus is used in a data exchange platform, the data exchange platform is separately connected to a first device and a second device, the first device is configured to process status data of a first object included in a real scene, the first object is an environmental object or an item in the real scene, the second device is configured to process a virtual scene, and the virtual scene is displayed in the real scene. The apparatus includes: an obtaining module, configured to obtain the status data that is of the first object and that is sent by the first device; and a sending module, configured to send the status data of the first object to the second device, where the status data of the first object is used for adjusting a second object included in the virtual scene, and the second object corresponds to the first object.

In a possible implementation, the first device is a collection device, and the status data of the first object is original status data obtained by the collection device through collection for the first object.

In a possible implementation, the first device is a computing device, the computing device is connected to a collection device, the status data of the first object is an attribute parameter obtained by the computing device by processing original status data, and the original status data is obtained by the collection device through collection for the first object.

In a possible implementation, the attribute parameter is an object attribute parameter of the first object.

In a possible implementation, the attribute parameter is a device attribute parameter of a virtual device, and the device attribute parameter of the virtual device is used for adjusting, in the virtual scene, a virtual device used for controlling the second object.

In a possible implementation, the first device is a first control device, the first control device is configured to control the first object, and the status data of the first object is control data generated by the control device for the first object.

In a possible implementation, the obtaining module is further configured to obtain status data that is of the second object and that is sent by the second device; and the sending module is further configured to send the status data of the second object to the first device, where the status data of the second object indicates the first control device to adjust the first object.

In a possible implementation, the first device is a second control device, and the second control device is configured to control the second object. The obtaining module is further configured to obtain status data that is of the second object and that is sent by the first device; and the sending module is further configured to send the status data of the second object to the second device, where the status data of the second object is used for adjusting the second object included in the virtual scene.

In a possible implementation, the data exchange platform is an internet of things IoT platform.

According to a fourth aspect, this application provides a virtual scene adjustment apparatus. The apparatus is used in a second device, and the second device is connected to a data exchange platform. The apparatus includes: an obtaining module, configured to obtain status data that is of a first object and that is sent by the data exchange platform, where the first object is an environmental object in a real scene or an item included in the real scene; and an adjustment module, configured to adjust, based on the status data of the first object, a second object included in a virtual scene, where the second object corresponds to the first object, and an adjusted virtual scene is used for being displayed in the real scene.

In a possible implementation, the adjustment module is specifically configured to adjust the second object based on the status data of the first object; and render the virtual scene based on an adjusted second object.

In a possible implementation, the status data of the first object is original status data obtained through collection for the first object, or is an object attribute parameter of the first object.

In a possible implementation, the adjustment module is specifically configured to adjust a virtual device based on the status data of the first object, where the virtual device is in the virtual scene, and the virtual device is configured to control the second object; and render the virtual scene by using an adjusted virtual device.

In a possible implementation, the status data of the first object is one of a device attribute parameter of the virtual device, original status data obtained through collection for the first object, and control data for the first object.

In a possible implementation, the data exchange platform is further connected to a first control device included in the real scene, and the first control device is configured to control the first object. The obtaining module is further configured to obtain status data of a second object. The apparatus further includes a sending module, and the sending module is further configured to send the status data of the second object to the data exchange platform, where the status data of the second object indicates the first control device to adjust the first object.

In a possible implementation, the data exchange platform is further connected to a second control device included in the real scene, and the second control device is configured to control the second object. The obtaining module is further configured to obtain status data that is of the second object and that is sent by the data exchange platform, where the status data of the second object is generated by the second control device; and the adjustment module is further configured to adjust, based on the status data of the second object, the second object included in the virtual scene.

In a possible implementation, the data exchange platform is an internet of things IoT platform.

According to a fifth aspect, this application provides a computing device cluster. The computing device cluster includes at least one computing device, and each computing device includes a processor and a memory. The memory is configured to store instructions. When the computing device cluster runs, the processor in each computing device executes the instructions stored in the memory, so that the computing device cluster performs the virtual scene adjustment method in any one of the first aspect or the possible implementations of the first aspect, or the virtual scene adjustment method in any one of the second aspect or the possible implementations of the second aspect. It should be noted that the memory may be integrated into the processor, or may be independent of the processor. Each computing device may further include a bus. The processor is connected to the memory through the bus. The memory may include a readable memory and a random access memory.

According to a sixth aspect, this application provides a computer-readable storage medium. The computer-readable storage medium stores instructions, and when the instructions are run on a computing device cluster (where the computing device cluster includes at least one computing device), the computing device cluster is caused to perform the virtual scene adjustment method in any one of the first aspect or the implementations of the first aspect, or the virtual scene adjustment method in any one of the second aspect or the implementations of the second aspect.

According to a seventh aspect, this application provides a computer program product including instructions. When the computer program product is run on a computing device cluster (where the computing device cluster includes at least one computing device), the computing device cluster is caused to perform the virtual scene adjustment method in any one of the first aspect or the implementations of the first aspect, or the virtual scene adjustment method in any one of the second aspect or the implementations of the second aspect.

In this application, based on the implementations in the foregoing aspects, the implementations may be further combined to provide more implementations.

### BRIEF DESCRIPTION OF DRAWINGS

FIG. 1 is a diagram of an application scenario according to an embodiment of this application;
FIG. 2 is a diagram of another application scenario according to an embodiment of this application;
FIG. 3 is a diagram of still another application scenario according to an embodiment of this application;
FIG. 4 is a diagram of yet another application scenario according to an embodiment of this application;
FIG. 5 is a schematic flowchart of a virtual scene adjustment method according to an embodiment of this application;
FIG. 6 is a schematic flowchart of another virtual scene adjustment method according to an embodiment of this application;
FIG. 7 is a schematic flowchart of still another virtual scene adjustment method according to an embodiment of this application;
FIG. 8 is a diagram of a structure of a virtual scene adjustment apparatus according to an embodiment of this application;
FIG. 9 is a diagram of a structure of another virtual scene adjustment apparatus according to an embodiment of this application;
FIG. 10 is a diagram of a structure of a computing device according to an embodiment of this application;
FIG. 11 is a diagram of a structure of a computing device cluster according to an embodiment of this application; and
FIG. 12 is a diagram of a structure of another computing device cluster according to an embodiment of this application.

### DESCRIPTION OF EMBODIMENTS

The following describes solutions in embodiments provided in this application with reference to accompanying drawings in this application.

In the specification, claims, and accompanying drawings of this application, the terms "first", "second", and the like are intended to distinguish between similar objects but do not necessarily indicate a specific order or sequence. It should be understood that the terms used in such a way are interchangeable in appropriate circumstances. This is merely a discrimination manner that is used when objects having a same attribute are described in embodiments of this application.

A user interacts with a virtual scene by using a display device in a real scene. For example, the user views the virtual scene in the real scene by using a display device, for example, a display screen, a projector, or a VR device. However, there is a large visual difference between the virtual scene and the real scene, resulting in poor interaction experience between the user and the virtual scene. The visual difference between the virtual scene and the real scene is caused by styles of different scenes, and is caused by different content displayed in the virtual scene and the real scene. For example, a light condition in the virtual scene is different from a light condition in the real scene. As a result, it is difficult to integrate the virtual scene and the real scene, and the virtual scene and the real scene are not coordinated, affecting user experience.

In view of this, embodiments of this application provide a virtual scene adjustment method. In the method, a data exchange platform obtains status data that is of a first object and that is sent by a first device. The first device is configured to process the status data of the first object included in a real scene. The first object is an environmental object in the real scene or an item included in the real scene. The data exchange platform sends the status data of the first object to a second device. The second device obtains the status data that is of the first object and that is sent by the data exchange platform, and adjusts, based on the status data of the first object, a second object that is included in a virtual scene and that corresponds to the first object. An adjusted virtual scene can be displayed in the real scene. The virtual scene is adjusted synchronously and accordingly based on adjustment of the environmental object or the item in the real scene, so that some capabilities of the virtual scene are consistent with some capabilities of the real scene, and the virtual scene and the real scene are better integrated. In this way, a visual difference that is between the virtual scene and the real scene and that is perceived by the user when the user views the virtual scene in the real scene can be reduced, so that experience of the user in the virtual scene is similar to experience in the real scene, and interaction experience between the user and the virtual scene is improved.

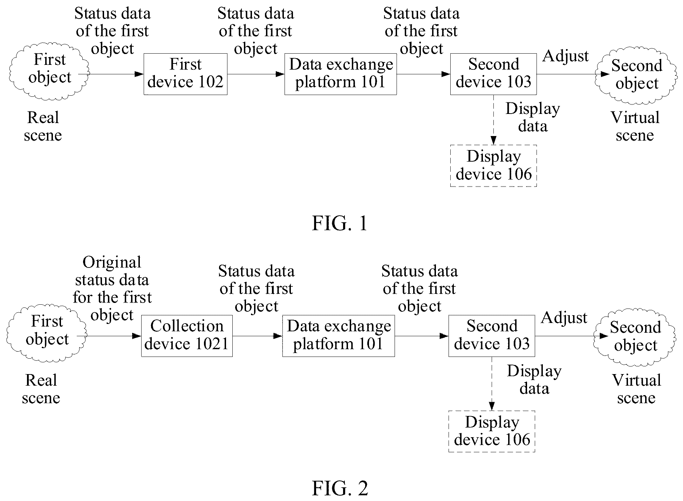

An application scenario of the virtual scene adjustment method is not limited in embodiments of this application. In some examples, FIG. 1 is a diagram of an application scenario according to an embodiment of this application.

Refer to FIG. 1. The virtual scene adjustment method provided in embodiments of this application can be applied to a data exchange platform 101. The data exchange platform 101 is separately connected to a first device 102 and a second device 103. The data exchange platform 101 is configured to implement data exchange between the first device 102 and the second device 103. In an example, the data exchange platform 101 is an internet of things (Internet of Things, IoT) platform.

The first device 102 is in a real scene, and is configured to process status data of a first object included in the real scene. In an example, the first object is an environmental object in the real scene. For example, the first object is light, temperature, or wind. In another example, the first object is an item included in the real scene. For example, the first object is a curtain or a television. The first device 102 generates the status data of the first object.

A device type of the first device 102 is not limited in this embodiment of this application.

In an example, refer to FIG. 2. The first device 102 is a collection device 1021. The collection device can collect original status data for the first object, and use the original status data as the status data of the first object. For example, the first object is light. The collection device is, for example, a camera, a light intensity sensor, or an artificial intelligence (artificial intelligence, AI) light source detection device. For another example, the first object is wind. The collection device is a wind detection device. For still another example, the first object is a curtain. The collection device is a curtain detection device.

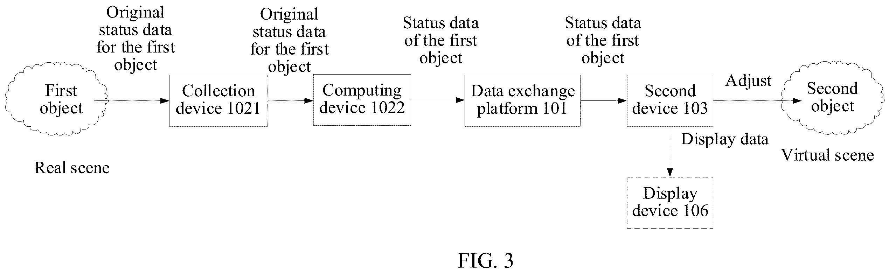

In another example, refer to FIG. 3. The first device 102 is a computing device 1022. The computing device 1022 is further connected to a collection device 104. The collection device 104 collects status data of a real scene, and sends the status data to the computing device 1022. The computing device 1022 determines status data of a first object based on the obtained status data.

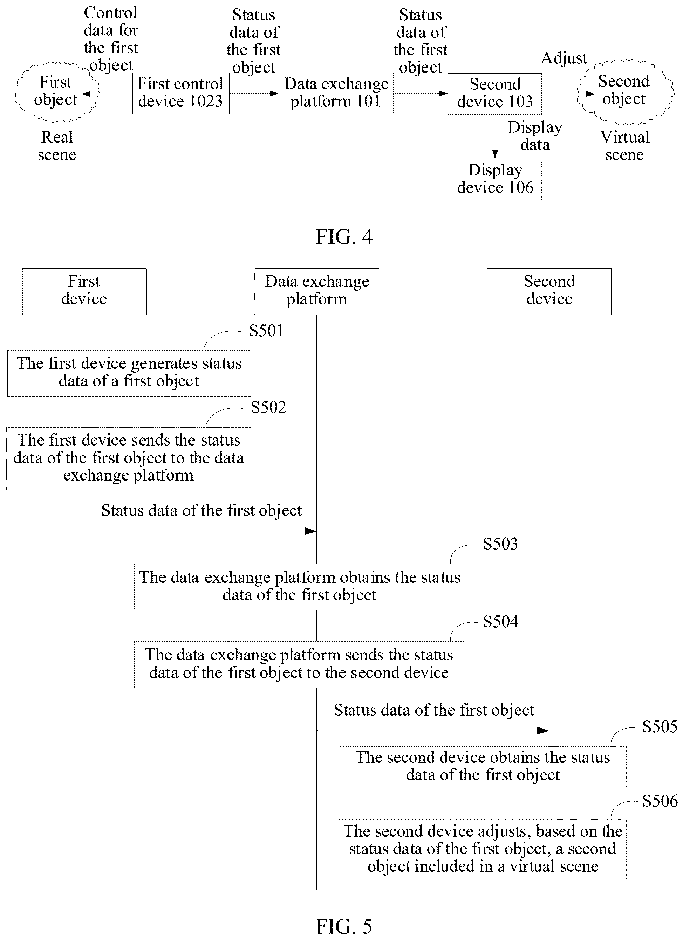

In still another example, refer to FIG. 4. The first device 102 is a first control device 1023. The first control device 1023 is configured to control a first object. In an implementation, the first control device 1023 directly controls the first object. An example in which the first object is light is used. The first control device 1023 is a luminaire having a light adjustment function. An example in which the first object is a curtain is used. The first device is a curtain control device. In another implementation, the first control device 1023 controls the first object by using a third device 105. The third device 105 is, for example, a device that controls the first object. An example in which the first object is light is used. The third device 105 is, for example, a luminaire. The first control device 1023 is, for example, a light adjustment device, or a light source adjustment device. The first control device 1023 generates control data for the first object, that is, status data of the first object.

The data exchange platform 101 obtains the status data that is of the first object and that is sent by the first device 102. The data exchange platform 101 sends the status data of the first object to the second device 103.

The second device 103 is configured to process a virtual scene. The second device 103 adjusts, based on the obtained status data of the first object, a second object that is included in the virtual scene and that corresponds to the first object. A device type of the second device 103 is not limited in this embodiment of this application. In an example, the second device 103 is a rendering device. The rendering device can render a two-dimensional or three-dimensional image and run the virtual scene. The rendering device is further connected to a display device 106. The rendering device is connected to the display device 106, for example, through a high definition multimedia interface (High Definition Multimedia Interface, HDMI) or a wireless network. The display device 106 is, for example, a device that can display the virtual scene, for example, a display, a projector, or an AR device. After adjusting the virtual scene, the rendering device generates display data of the virtual scene. The rendering device sends the display data to the display device 106. The display device 106 displays the virtual scene based on the display data. In another example, the second device 103 is a rendering device having a display function. For example, the second device is a computer. After adjusting the virtual scene, the second device 103 displays the virtual scene.

It should be noted that the application scenarios shown in FIG. 1 to FIG. 4 are merely used as examples, and an application scenario of the virtual scene adjustment method provided in this application is not limited to the application scenarios shown in FIG. 1 to FIG. 4.

The following describes in detail various non-limiting specific implementations of the virtual scene adjustment method provided in this application.

FIG. 5 is a schematic flowchart of a virtual scene adjustment method according to an embodiment of this application. The method includes S501 to S506.

S501: A first device generates status data of a first object.

The first object is an environmental object or an item with a status being adjustable in a real scene. In an example, the first object is light, wind, temperature, or another environmental object. In another example, the first object is an item with a status being adjustable, for example, a curtain or a television.

The first device is in the real scene, and the first device can process the status data of the first object.

The status data of the first object is used for describing a status of the first object. A specific type of the status data of the first object is not limited in this embodiment of this application. The specific type of the status data of the first object is related to a type of the first object and a type of the first device.

The following provides examples of three different types of status data of the first object of the first device.

In a first type, the application scenario in which the first device is a collection device shown in FIG. 2 is used as an example.

The collection device collects original status data for the first object in the real scene in real time or at regular intervals. The original status data obtained by the collection device through collection is the status data of the first object. An example in which the first object is light is used. The collection device is, for example, a camera, a light intensity sensor, or an AI light source detection device. An example in which the collection device is a camera is used. The camera collects a light image in the real scene, that is, the status data of the first object. The light image can be in a red green blue (Red Green Blue, RGB) data format or a YUV (a color encoding method) data format. An example in which the collection device is a light intensity sensor is used. The light intensity sensor collects light intensity in the real scene in real time or at regular intervals, and generates a value of the light intensity, that is, the status data of the first object. An example in which the first object is a curtain is used. The collection device is, for example, a curtain detection device. The curtain detection device is configured to detect whether the curtain is open or closed, to obtain the status data of the first object.

It should be noted that, when the first object is an environmental object, the collection device is configured near a display device that displays a virtual scene, so that the collection device collects environment data near the display device, to better integrate the virtual scene with a nearby real scene.

In a second type, the application scenario in which the first device is a computing device shown in FIG. 3 is used as an example.

The computing device is connected to a collection device. The collection device collects original status data for the first object in real time or at regular intervals, and sends the collected original status data to the computing device. The computing device processes the original status data sent by the collection device, to obtain an attribute parameter. The attribute parameter is data used for describing an attribute of the first object in an environment of the real scene.

In some cases, a data amount of the attribute parameter is less than a data amount of the original status data. This facilitates a data exchange platform to transmit the status data of the first object, especially for a data exchange platform for which a data amount of transmitted data is limited, so that data transmission costs needed for transmitting the status data of the first object by the data exchange platform can be reduced.

In a possible implementation, a second object in a virtual scene corresponding to the first object can be configured without using another virtual device. The attribute parameter is an object attribute parameter of the first object. An example in which the first object is light is used. The attribute parameter is, for example, light intensity data of the light. A second device directly adjusts light intensity of ambient light in the virtual scene based on the light intensity data of the light.

For example, the first object is light, and the collection device is a camera. The collection device obtains a light image through collection, and sends the light image to the computing device. The computing device determines light intensity data, that is, the object attribute parameter of the first object, based on the light image. In an example, the light image is in an RGB data format. The computing device converts the light image into a YUV data format, and determines the light intensity data based on light intensity represented by Y. In another example, the light image is in a YUV data format. The computing device determines the light intensity data based on light intensity represented by Y. The foregoing implementation of determining the object attribute parameter of the first object is merely used as an example. This is not limited in this embodiment of this application.

In another possible implementation, a virtual device controls a second object in a virtual scene corresponding to the first object. The attribute parameter is a device attribute parameter of the virtual device. An example in which the first object is light is used. The device attribute parameter of the virtual device includes, for example, light intensity of a virtual light source, a light source position, and a light source orientation. A second device can adjust, based on the device attribute parameter of the virtual device, the virtual light source included in the virtual scene, to further implement light adjustment in the virtual scene. The second object in the virtual scene is adjusted based on the device attribute parameter of the virtual device, so that a more natural display effect of the virtual scene can be achieved, and user experience of interaction between a user and the virtual scene is improved.

An implementation in which the computing device determines the device attribute parameter of the virtual device based on the original status data is not limited in this embodiment of this application, and can be preset based on a data processing requirement. In an example, the first object is light, and the collection device is a camera. A light source prediction model is pre-established. The light source prediction model is an artificial intelligence model. The light source prediction model is obtained through pre-training by using training data. The training data includes a light image and a label corresponding to the light image, and the label is device attribute data of a light source. The computing device processes, by using the light source prediction model, the light image collected from the camera, to obtain the device attribute data that is of the light source and that is output by the light source prediction model.

In a third type, the application scenario in which the first device is a first control device shown in FIG. 4 is used as an example.

The first control device can control the first object, and control data generated by the first control device for the first object is the status data of the first object. A manner of triggering the first control device to generate the control data for the first object is not limited in this embodiment of this application. In a possible implementation, the first control device generates the control data for the first object based on triggering of a user that uses the control device. In another possible implementation, the first control device automatically triggers generation of the control data for the first object.

The foregoing is specific types of the status data of the first object in the three different scenarios provided in this embodiment of this application. The foregoing three scenarios are merely used as examples, and this is not limited in this embodiment of this application.

In addition, a manner of triggering the first device to generate the status data of the first object is not limited in this embodiment of this application. In an implementation, the first device generates the status data of the first object when detecting that the status of the first object changes. In another implementation, the first device generates the status data of the first object at regular intervals. In still another implementation, the first device triggers generation of the status data of the first object based on an operation of adjusting the status of the first object by the user.

S502: The first device sends the status data of the first object to the data exchange platform.

An interaction manner between the first device and the data exchange platform can be pre-agreed on. In an example, the first device sends an adjustment message to the data exchange platform. The adjustment message includes the status data of the first object.

S503: The data exchange platform obtains the status data of the first object.

S504: The data exchange platform sends the status data of the first object to the second device.

The data exchange platform determines, based on the obtained status data of the first object, the second device that needs to process the status data of the first object. The second device is configured to process the virtual scene.

In a possible implementation, the data exchange platform pre-establishes a correspondence between the first device and the second device. For example, the data exchange platform stores a correspondence between a device identifier of the first device and a device identifier of the second device. The data exchange platform determines the second device based on the device identifier that is of the first device and that is included in the adjustment message sent by the first device and the correspondence between the device identifier of the first device and the device identifier of the second device.

In another possible implementation, a subscription relationship between the data exchange platform and a virtual device included in the virtual scene processed by the second device is pre-established. The virtual device is configured to control the second object in the virtual scene. The second object corresponds to the first object. The second object is an environmental object or an item in the virtual scene. The subscription relationship is specifically, for example, that the virtual device subscribes to topic (topic) data. The topic data is, for example, data related to the first object. The data exchange platform releases the obtained status data of the first object. The data exchange platform determines the second device based on the pre-established subscription relationship.

An interaction manner between the data exchange platform and the second device can be pre-agreed on. In an example, the data exchange platform sends the adjustment message to the second device. The adjustment message includes the status data of the first object.

S505: The second device obtains the status data of the first object.

S506: The second device adjusts, based on the status data of the first object, the second object included in the virtual scene.

The first object corresponds to the second object. The second device accordingly adjusts the second object based on the status data of the first object.

A manner of adjusting the second object by the second device is determined based on a type of the status data of the first object.

In a possible implementation, the status data of the first object is status data for the first object. For example, the status data of the first object is original status data obtained through collection for the first object, or is an object attribute parameter of the first object. The second device adjusts the second object based on the status data of the first object. An example in which the first object is light, and the status data of the first object is light intensity is used. The second device adjusts intensity of ambient light in the virtual scene based on the light intensity, and adjusts the intensity of the ambient light to be the same as the light intensity.

It should be noted that when the status data of the first object is the original status data obtained through collection for the first object, the second device first processes the original status data to obtain the object attribute parameter of the first object. An implementation of determining the object attribute parameter of the first object based on the original status data is not limited in this embodiment of this application. An example in which the first object is light, and the original status data for the first object is a light image is used. The computing device determines, based on the light image, light intensity data, that is, the object attribute parameter of the first object. In an example, the light image is in an RGB data format. The second device converts the light image into a YUV data format, and determines the light intensity data based on light intensity represented by Y. In another example, the light image is in a YUV data format. The second device determines the light intensity data based on light intensity represented by Y.

The second device re-renders the virtual scene based on an adjusted second object, to implement a corresponding update of the virtual scene.

In another possible implementation, the status data of the first object is status data of the virtual device for controlling the second object. For example, the status data of the first object is the device attribute parameter of the virtual device, the original status data for the first object, or the control data for the first object. The second device can process the original status data for the first object to obtain the device attribute parameter of the virtual device. For example, the second device obtains the device attribute parameter of the virtual device by using an artificial intelligence model that has been trained. The second device adjusts the virtual device based on the status data of the first object, to further adjust the second object.

In some cases, in the virtual scene, the virtual device for controlling the second object has already been established. The second device adjusts a configuration parameter of the virtual device based on the status data of the first object. In some other cases, in the virtual scene, the virtual device for controlling the second object is not pre-established. The second device establishes the virtual device in the virtual scene based on an adjustment parameter of the first object. It should be noted that the virtual device established in the virtual scene may be a device corresponding to the item included in the real scene, or may be a virtual device that is only in the virtual scene.

The second device re-renders the virtual scene based on an adjusted virtual device, to implement a corresponding update of the virtual scene.

An adjusted virtual scene is used for being displayed on the display device. In an example, the second device has a display function. For example, the second device has a display screen. The second device displays the virtual scene after re-rendering the virtual scene. In another example, the second device has no display function, and the second device is connected to another display device. The display device is in the real scene. The second device generates display data based on a re-rendered virtual scene. The second device sends the display data to the display device, so that the display device displays the virtual scene in the real scene based on the display data.

In this way, the virtual scene can be adjusted synchronously and accordingly based on adjustment of the environmental object or the item in the real scene. Based on the virtual scene adjustment method provided in this embodiment of this application, some capabilities of the virtual scene are consistent with some capabilities of the real scene, so that the virtual scene is better integrated with the real scene, to reduce a visual difference of the user between the virtual scene and the real scene. In this way, experience of the user in the virtual scene is similar to experience in the real scene, and interaction experience between the user and the virtual scene is improved.

In addition, in some possible implementation scenarios, a second control device in the real scene can control the second object in the virtual scene. An embodiment of this application provides another virtual scene adjustment method. In addition to the foregoing steps, the method further includes the following steps.

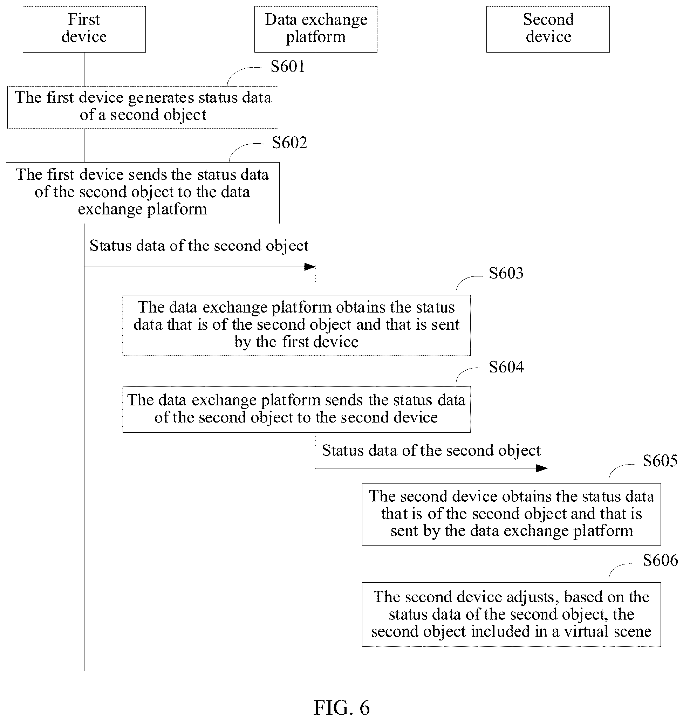

FIG. 6 is a schematic flowchart of another virtual scene adjustment method according to an embodiment of this application. In addition to S501 to S506, the method further includes S601 to S606.

S601: A first device generates status data of a second object.

The first device is a second control device. The second control device is a control device included in a real scene. The second control device is a preset control device that is used for adjusting the second object in a virtual scene. In an example, the second control device is a control device for controlling light in the virtual scene. In another example, the second control device is a control device for controlling a curtain in the virtual scene.

The status data that is of the second object and that is generated by the first device is used for describing a status of the second object. The status data of the second object is, for example, control data for the second object.

A manner of triggering the second control device to generate the status data of the second object is not limited in this embodiment of this application. In a possible implementation, the second control device generates the status data of the second object based on triggering of a user that uses the control device. In another possible implementation, the second control device automatically triggers generation of the status data of the second object.

S602: The first device sends the status data of the second object to a data exchange platform.

An interaction manner between the first device and the data exchange platform can be pre-agreed on. In an example, the first device sends an adjustment message to the data exchange platform. The adjustment message includes the status data of the second object.

S603: The data exchange platform obtains the status data that is of the second object and that is sent by the first device.

S604: The data exchange platform sends the status data of the second object to a second device.

In a possible implementation, the data exchange platform pre-establishes a correspondence between the first device and the second device. For example, the data exchange platform stores a correspondence between a device identifier of the first device and a device identifier of the second device. The data exchange platform determines the second device based on the device identifier that is of the first device and that is included in the adjustment message sent by the first device and the correspondence between the device identifier of the first device and the device identifier of the second device.

In another possible implementation, a subscription relationship between the data exchange platform and a virtual device included in the virtual scene processed by the second device is pre-established. The virtual device is configured to control the second object in the virtual scene. The second object is an environmental object or an item in the virtual scene. The subscription relationship is specifically, for example, that the virtual device subscribes to topic data. The topic data is, for example, data related to the second object. The data exchange platform releases the obtained status data of the second object. The data exchange platform determines the second device based on the pre-established subscription relationship.

An interaction manner between the data exchange platform and the second device can be pre-agreed on. In an example, the data exchange platform sends the adjustment message to the second device. The adjustment message includes the status data of the second object.

S605: The second device obtains the status data that is of the second object and that is sent by the data exchange platform.

S606: The second device adjusts, based on the status data of the second object, the second object included in the virtual scene.

In a possible implementation, the status data of the second object is status data for the second object. The second device adjusts the second object based on the status data of the second object. An example in which the second object is light, and the status data of the second object is light intensity is used. The second device adjusts intensity of ambient light in the virtual scene based on the light intensity, and adjusts the intensity of the ambient light to be the same as the light intensity.

The second device re-renders the virtual scene based on an adjusted second object, to implement a corresponding update of the virtual scene.

In another possible implementation, the status data of the second object is status data of the virtual device for controlling the second object. For example, the status data of the second object is a device attribute parameter of the virtual device, or control data for the second object. The second device adjusts the virtual device based on the status data of the second object, to further adjust the second object.

The second device re-renders the virtual scene based on an adjusted virtual device, to implement a corresponding update of the virtual scene.

An adjusted virtual scene is used for being displayed on a display device.

It can be learned based on related content of S601 to S606 that the user can adjust the virtual scene by using the control device included in the real scene. In this way, the user can flexibly adjust, based on a requirement of viewing the virtual scene, the virtual scene by using the control device included in the real scene, to achieve a better interaction effect between the user and the virtual scene.

In the foregoing methods, a method for adjusting a virtual scene based on a real scene is described. An embodiment of this application further provides a virtual scene adjustment method. In addition to the foregoing methods, a real scene can be adjusted based on a virtual scene.

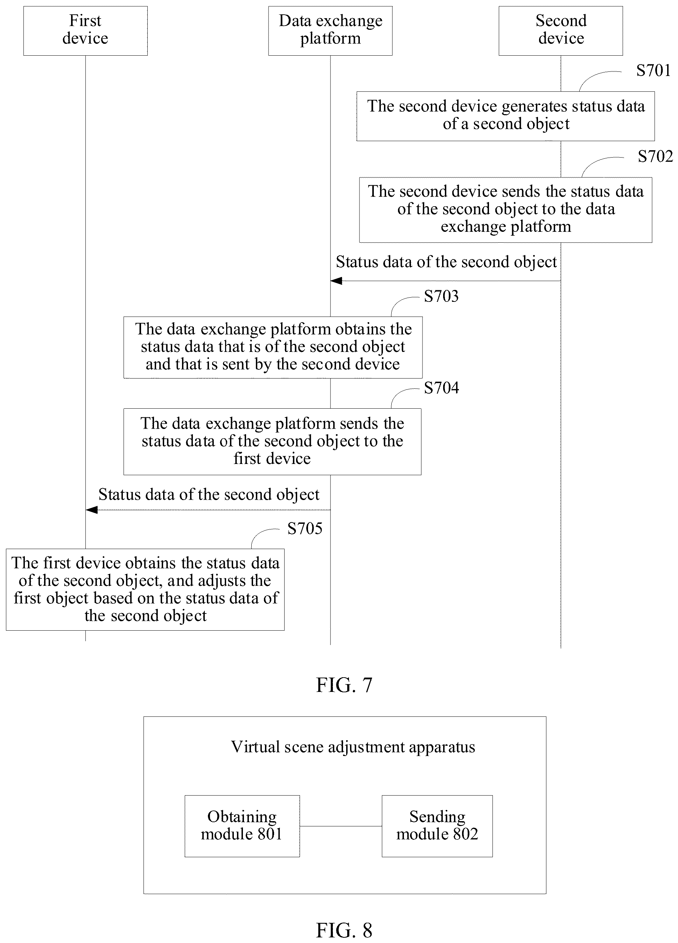

FIG. 7 is a schematic flowchart of still another virtual scene adjustment method according to an embodiment of this application. In addition to the foregoing steps, the method further includes S701 to S705.

It should be noted that the method is applied to a scenario in which a first device is a first control device.

S701: A second device generates status data of a second object.

The status data of the second object is used for describing a status of the second object.

A manner of triggering the second device to generate the status data of the second object is not limited in this embodiment of this application.

In a possible implementation, the status data of the second object may be, for example, triggered to be generated in a process in which a user interacts with a virtual scene. A manner in which the user triggers the second device to generate the status data of the second object is not limited in this embodiment of this application. In an example, an interaction interface between the user and the virtual scene includes a control interface for the virtual scene. The control interface includes, for example, an adjustment control for the second object, for example, an adjustment button or a selection panel. The user can trigger the adjustment control to trigger the second device to generate the status data of the second object.

In another possible implementation, the second device automatically triggers generation of the status data of the second object based on a preset adjustment rule of the virtual scene.

S702: The second device sends the status data of the second object to a data exchange platform.

An interaction manner between the second device and the data exchange platform can be pre-agreed on. In an example, the second device sends an adjustment message to the data exchange platform. The adjustment message includes the status data of the second object.

S703: The data exchange platform obtains the status data that is of the second object and that is sent by the second device.

S704: The data exchange platform sends the status data of the second object to the first device.

The data exchange platform determines, based on the obtained status data of the second object, the first device that needs to process the status data of the second object.

In a possible implementation, the data exchange platform pre-establishes a correspondence between the first device and the second device. For example, the data exchange platform stores a correspondence between a device identifier of the first device and a device identifier of the second device. The data exchange platform determines the first device based on the device identifier that is of the second device and that is included in the adjustment message sent by the second device and the correspondence between the device identifier of the first device and the device identifier of the second device.

In another possible implementation, a subscription relationship between the data exchange platform and the first device, that is, the first control device, is pre-established. The subscription relationship is specifically, for example, that the first device subscribes to topic data. The topic data is, for example, data related to a first object. The data exchange platform releases obtained the status data of the second object. The first object corresponds to the second object. The status data for the second object is related to the first object. The data exchange platform determines the first device based on the pre-established subscription relationship.

An interaction manner between the data exchange platform and the first device can be pre-agreed on. In an example, the data exchange platform sends the adjustment message to the first device. The adjustment message includes the status data of the second object.

S705: The first device obtains the status data of the second object, and adjusts the first object based on the status data of the second object.

The first device accordingly adjusts the first object based on the status data of the second object. In a possible implementation, the first device generates control data for the first object based on the status data of the second object. In an example, the first device directly controls the first object, and the first device executes the control data for the first object. In another example, the first device controls the first object by using another device, for example, a third device. The first device sends the control data for the first object to the third device, so that the third device executes the control data for the first object, to adjust the first object in a real scene.

In this way, a connection between the virtual scene and the real scene can be established, so that the user controls the real scene based on the virtual scene, to improve user experience of interaction between the user and the virtual scene.

This application further provides a virtual scene adjustment apparatus. The apparatus is used in a data exchange platform, the data exchange platform is separately connected to a first device and a second device, the first device is configured to process status data of a first object included in a real scene, the first object is an environmental object or an item in the real scene, the second device is configured to process a virtual scene, and the virtual scene is displayed in the real scene. As shown in FIG. 8, the apparatus includes:
an obtaining module 801, configured to obtain the status data that is of the first object and that is sent by the first device; and
a sending module 802, configured to send the status data of the first object to the second device, where the status data of the first object is used for adjusting a second object included in the virtual scene, and the second object corresponds to the first object.

In a possible implementation, the first device is a collection device, and the status data of the first object is original status data obtained by the collection device through collection for the first object.

In a possible implementation, the first device is a computing device, the computing device is connected to a collection device, the status data of the first object is an attribute parameter obtained by the computing device by processing original status data, and the original status data is obtained by the collection device through collection for the first object.

In a possible implementation, the attribute parameter is an object attribute parameter of the first object.

In a possible implementation, the attribute parameter is a device attribute parameter of a virtual device, and the device attribute parameter of the virtual device is used for adjusting, in the virtual scene, a virtual device used for controlling the second object.

In a possible implementation, the first device is a first control device, the first control device is configured to control the first object, and the status data of the first object is control data generated by the control device for the first object.

In a possible implementation, the obtaining module 801 is further configured to obtain status data that is of the second object and that is sent by the second device.

The sending module 802 is further configured to send the status data of the second object to the first device, where the status data of the second object indicates the first control device to adjust the first object.

In a possible implementation, the first device is a second control device, and the second control device is configured to control the second object. The obtaining module 801 is further configured to obtain status data that is of the second object and that is sent by the first device.

The sending module 802 is further configured to send the status data of the second object to the second device, where the status data of the second object is used for adjusting the second object included in the virtual scene.

In a possible implementation, the data exchange platform is an internet of things IoT platform.

Both the obtaining module 801 and the sending module 802 may be implemented by using software, or may be implemented by using hardware. For example, the following uses the obtaining module 801 as an example to describe an implementation of the obtaining module 801. Similarly, for an implementation of the sending module 802, refer to the implementation of the obtaining module 801.

A module is used as an example of a software functional unit, and the obtaining module 801 may include code run on a computing instance. The computing instance may include at least one of a physical host (a computing device), a virtual machine, or a container. Further, there may be one or more computing instances. For example, the obtaining module 801 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be disposed in each VPC for communication between two VPCs in a same region or cross-region communication between VPCs in different regions. An interconnection between VPCs is implemented through the communication gateway.

A module is used as an example of a hardware functional unit, and the obtaining module 801 may include at least one computing device, for example, a server. Alternatively, the obtaining module 801 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the obtaining module 801 may be distributed in a same region, or may be distributed in different regions. The plurality of computing devices included in the obtaining module 801 may be distributed in a same AZ, or may be distributed in different AZs. Similarly, the plurality of computing devices included in the obtaining module 801 may be distributed on a same VPC, or may be distributed on a plurality of VPCs. The plurality of computing devices may be any combination of computing devices such as a server, an ASIC, a PLD, a CPLD, an FPGA, and GAL.

It should be noted that, in another embodiment, the obtaining module 801 may be configured to perform any step in the foregoing virtual scene adjustment method applied to the data exchange platform, and the sending module 802 may be configured to perform any step in the virtual scene adjustment method applied to the data exchange platform. Steps implemented by the obtaining module 801 and the sending module 802 may be specified as needed, the obtaining module 801 and the sending module 802 respectively implement different steps in the virtual scene adjustment method applied to the data exchange platform, to implement all functions of the virtual scene adjustment apparatus.

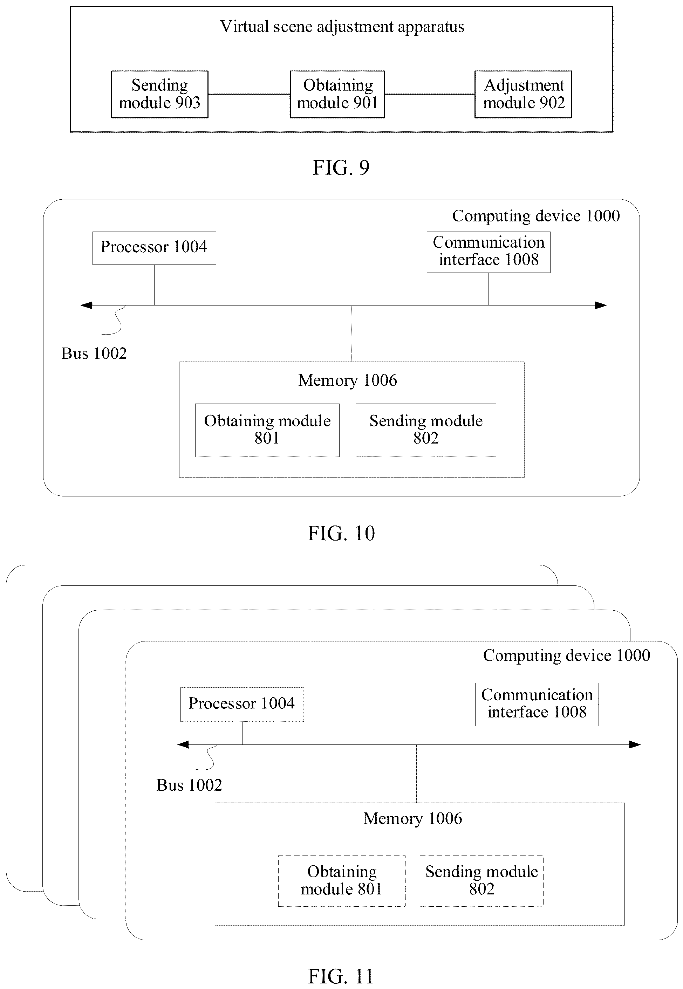

This application further provides another virtual scene adjustment apparatus. The apparatus is used in a second device, and the second device is connected to a data exchange platform. As shown in FIG. 9, the apparatus includes:
an obtaining module 901, configured to obtain status data that is of a first object and that is sent by the data exchange platform, where the first object is an environmental object in a real scene or an item included in the real scene; and
an adjustment module 902, configured to adjust, based on the status data of the first object, a second object included in a virtual scene, where the second object corresponds to the first object, and an adjusted virtual scene is used for being displayed in the real scene.

In a possible implementation, the adjustment module 902 is specifically configured to adjust the second object based on the status data of the first object; and render the virtual scene based on an adjusted second object.

In a possible implementation, the status data of the first object is original status data obtained through collection for the first object, or is an object attribute parameter of the first object.

In a possible implementation, the adjustment module 902 is specifically configured to adjust a virtual device based on the status data of the first object, where the virtual device is in the virtual scene, and the virtual device is configured to control the second object; and render the virtual scene by using an adjusted virtual device.

In a possible implementation, the status data of the first object is one of a device attribute parameter of the virtual device, original status data obtained through collection for the first object, and control data for the first object.

In a possible implementation, the data exchange platform is further connected to a first control device included in the real scene, and the first control device is configured to control the first object. The obtaining module 901 is further configured to obtain status data of a second object.

The apparatus further includes a sending module 903.

The sending module 903 is further configured to send the status data of the second object to the data exchange platform, where the status data of the second object indicates the first control device to adjust the first object.

In a possible implementation, the data exchange platform is further connected to a second control device included in the real scene, and the second control device is configured to control the second object. The obtaining module 901 is further configured to obtain status data that is of the second object and that is sent by the data exchange platform, where the status data of the second object is generated by the second control device.

The adjustment module 902 is further configured to adjust, based on the status data of the second object, the second object included in the virtual scene.

In a possible implementation, the data exchange platform is an internet of things IoT platform.

All the obtaining module 901, the adjustment module 902, and the sending module 903 may be implemented by using software, or may be implemented by using hardware. For example, the following uses the obtaining module 901 as an example to describe an implementation of the obtaining module 901. Similarly, for implementations of the adjustment module 902 and the sending module 903, refer to the implementation of the obtaining module 901.

A module is used as an example of a software functional unit, and the obtaining module 901 may include code run on a computing instance. The computing instance may include at least one of a physical host (a computing device), a virtual machine, or a container. Further, there may be one or more computing instances. For example, the obtaining module 901 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be disposed in each VPC for communication between two VPCs in a same region or cross-region communication between VPCs in different regions. An interconnection between VPCs is implemented through the communication gateway.

A module is used as an example of a hardware functional unit, and the obtaining module 901 may include at least one computing device, for example, a server. Alternatively, the obtaining module 901 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the obtaining module 901 may be distributed in a same region, or may be distributed in different regions. The plurality of computing devices included in the obtaining module 901 may be distributed in a same AZ, or may be distributed in different AZs. Similarly, the plurality of computing devices included in the obtaining module 901 may be distributed on a same VPC, or may be distributed on a plurality of VPCs. The plurality of computing devices may be any combination of computing devices such as a server, an ASIC, a PLD, a CPLD, an FPGA, and GAL.

It should be noted that, in another embodiment, the obtaining module 901 may be configured to perform any step in the foregoing virtual scene adjustment method applied to the second device, the adjustment module 902 may be configured to perform any step in the virtual scene adjustment method applied to the second device, and the sending module 903 may be configured to perform any step in the virtual scene adjustment method applied to the second device. Steps implemented by the obtaining module 901, the adjustment module 902, and the sending module 903 may be specified as needed, the obtaining module 901, the adjustment module 902, and the sending module 903 respectively implement different steps in the virtual scene adjustment method applied to the second device, to implement all functions of the virtual scene adjustment apparatus.

This application further provides a computing device 1000. As shown in FIG. 10, the computing device 1000 includes a bus 1002, a processor 1004, a memory 1006, and a communication interface 1008. The processor 1004, the memory 1006, and the communication interface 1008 communicate with each other through the bus 1002. The computing device 1000 may be a server or a terminal device. It should be understood that quantities of processors and memories in the computing device 1000 are not limited in this application.

The bus 1002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 10. However, it does not mean that there is only one bus or only one type of bus. The bus 1002 may include a path for transferring information between various components (for example, the memory 1006, the processor 1004, and the communication interface 1008) of the computing device 1000.

The processor 1004 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1006 stores executable program code. Refer to FIG. 10. The processor 1004 executes the executable program code to separately implement functions of the obtaining module 801 and the sending module 802, to implement a virtual scene adjustment method applied to a data exchange platform. The memory 1006 stores instructions used for performing the virtual scene adjustment method applied to the data exchange platform.

Alternatively, the processor 1004 executes the executable program code to separately implement functions of the obtaining module 901, the adjustment module 902, and the sending module 903, to implement a virtual scene adjustment method applied to a second device. In other words, the memory 1006 stores instructions used for performing the virtual scene adjustment method applied to the second device.

The communication interface 1008 uses a transceiver module, for example, but not limited to, a network interface card or a transceiver, to implement communication between the computing device 1000 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 11, the computing device cluster includes at least one computing device 1000. Memories 1006 of one or more computing devices 1000 in the computing device cluster may store same instructions used for performing a virtual scene adjustment method applied to a data exchange platform.

In some possible implementations, the memories 1006 of the one or more computing devices 1000 in the computing device cluster may alternatively respectively store some instructions used for performing a virtual scene adjustment method applied to the data exchange platform. In other words, a combination of the one or more computing devices 1000 may jointly execute the instructions used for performing the virtual scene adjustment method applied to the data exchange platform.

It should be noted that the memories 1006 of different computing devices 1000 in the computing device cluster may store different instructions respectively used for performing some functions of a virtual scene adjustment apparatus used in a data exchange platform. In other words, the instructions stored in the memories 1006 of the different computing devices 1000 may implement functions of one or more of the obtaining module 801 and the sending module 802.

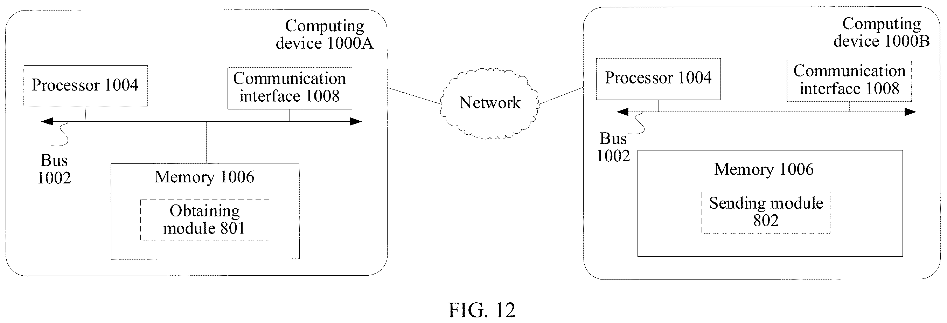

In some possible implementations, the one or more computing devices in the computing device cluster may be connected through a network. The network may be a wide area network, a local area network, or the like. FIG. 12 shows a possible implementation. As shown in FIG. 12, two computing devices 1000A and 1000B are connected through a network. Specifically, each computing device is connected to the network through a communication interface of the computing device. In the possible implementation, a memory 1006 of the computing device 1000A stores instructions for performing a function of the obtaining module 801. In addition, a memory 1006 of the computing device 1000B stores instructions for performing a function of the sending module 802.

A connection manner between the computing device clusters shown in FIG. 12 may be that, in consideration of a requirement (for example, a large amount of data is stored) of the virtual scene adjustment method that applied to the data exchange platform and that is provided in this application, it is considered that a function implemented by the sending module 802 is performed by the computing device 1000B.

It should be understood that a function of the computing device 1000A shown in FIG. 12 may alternatively be completed by a plurality of computing devices 1000. Similarly, a function of the computing device 1000B may alternatively be completed by a plurality of computing devices 1000.

An embodiment of this application further provides another computing device cluster. For a connection relationship between computing devices in the computing device cluster, refer to the connection manners of the computing device cluster in FIG. 11 and FIG. 12 similarly. A difference is that memories 1006 of one or more computing devices 1000 in the computing device cluster may store same instructions used for performing a virtual scene adjustment method applied to a second device.

In some possible implementations, the memories 1006 of the one or more computing devices 1000 in the computing device cluster may alternatively respectively store some instructions used for performing a virtual scene adjustment method applied to the second device. In other words, a combination of one or more computing devices 1000 may jointly execute instructions of the virtual scene adjustment method applied to the second device.

It should be noted that the memories 1006 of different computing devices 1000 in the computing device cluster may store different instructions used for performing some functions of a virtual scene adjustment apparatus used in a second device. In other words, the instructions stored in the memories 1006 of the different computing devices 1000 may implement functions of one or more of the obtaining module 901, the adjustment module 902, and the sending module 903.

An embodiment of this application further provides a computer program product including instructions. The computer program product may be software or a program product that includes instructions and that can run on a computing device or be stored in any usable medium. When the computer program product is run on at least one computing device, the at least one computing device is caused to perform a virtual scene adjustment method applied to a data exchange platform or a virtual scene adjustment method applied to a second device.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a computing device to perform a virtual scene adjustment method applied to a data exchange platform, or instruct a computing device to perform a virtual scene adjustment method applied to a second device.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof. Such modifications or equivalent replacements do not cause corresponding technical solutions to depart from the protection scope of the technical solutions in embodiments of the present invention.

## Claims

1. A virtual scene adjustment method, wherein the method is applied to a data exchange platform, the data exchange platform is separately connected to a first device and a second device, the first device is configured to process status data of a first object comprised in a real scene, the first object is an environmental object or an item in the real scene, the second device is configured to process a virtual scene, the virtual scene is displayed in the real scene, and the method comprises:
obtaining the status data that is of the first object and that is sent by the first device; and
sending the status data of the first object to the second device, wherein the status data of the first object is used for adjusting a second object comprised in the virtual scene, and the second object corresponds to the first object.

2. The method according to claim 1, wherein the first device is a collection device, and the status data of the first object is original status data obtained by the collection device through collection for the first object.

3. The method according to claim 1, wherein the first device is a computing device, the computing device is connected to a collection device, the status data of the first object is an attribute parameter obtained by the computing device by processing original status data, and the original status data is obtained by the collection device through collection for the first object.

4. The method according to claim 3, wherein the attribute parameter is an object attribute parameter of the first object.

5. The method according to claim 3, wherein the attribute parameter is a device attribute parameter of a virtual device, and the device attribute parameter of the virtual device is used for adjusting, in the virtual scene, a virtual device used for controlling the second object.

6. The method according to claim 1, wherein the first device is a first control device, the first control device is configured to control the first object, and the status data of the first object is control data generated by the control device for the first object.

7. The method according to claim 6, wherein the method further comprises:
obtaining status data that is of the second object and that is sent by the second device; and
sending the status data of the second object to the first device, wherein the status data of the second object indicates the first control device to adjust the first object.

8. The method according to claim 1, wherein the first device is a second control device, the second control device is configured to control the second object, and the method further comprises:
obtaining status data that is of the second object and that is sent by the first device; and
sending the status data of the second object to the second device, wherein the status data of the second object is used for adjusting the second object comprised in the virtual scene.

9. The method according to any one of claims 1 to 8, wherein the data exchange platform is an internet of things IoT platform.

10. A virtual scene adjustment method, wherein the method is applied to a second device, the second device is connected to a data exchange platform, and the method comprises:
obtaining status data that is of a first object and that is sent by the data exchange platform, wherein the first object is an environmental object in a real scene or an item comprised in the real scene; and
adjusting, based on the status data of the first object, a second object comprised in a virtual scene, wherein the second object corresponds to the first object, and an adjusted virtual scene is used for being displayed in the real scene.

11. The method according to claim 10, wherein the adjusting, based on the status data of the first object, the second object comprised in the virtual scene comprises:
adjusting the second object based on the status data of the first object; and
rendering the virtual scene based on an adjusted second object.

12. The method according to claim 11, wherein the status data of the first object is original status data obtained through collection for the first object, or is an object attribute parameter of the first object.

13. The method according to claim 10, wherein the adjusting, based on the status data of the first object, the second object comprised in the virtual scene comprises:
adjusting a virtual device based on the status data of the first object, wherein the virtual device is in the virtual scene, and the virtual device is configured to control the second object; and
rendering the virtual scene by using an adjusted virtual device.

14. The method according to claim 13, wherein the status data of the first object is one of a device attribute parameter of the virtual device, original status data obtained through collection for the first object, and control data for the first object.

15. The method according to claim 10, wherein the data exchange platform is further connected to a first control device comprised in the real scene, the first control device is configured to control the first object, and the method further comprises:
obtaining status data of the second object; and
sending the status data of the second object to the data exchange platform, wherein the status data of the second object indicates the first control device to adjust the first object.

16. The method according to claim 10, wherein the data exchange platform is further connected to a second control device comprised in the real scene, the second control device is configured to control the second object, and the method further comprises:
obtaining status data that is of the second object and that is sent by the data exchange platform, wherein the status data of the second object is generated by the second control device; and
adjusting, based on the status data of the second object, the second object comprised in the virtual scene.

17. The method according to any one of claims 10 to 16, wherein the data exchange platform is an internet of things IoT platform.

18. A virtual scene adjustment apparatus, wherein the apparatus is used in a data exchange platform, the data exchange platform is separately connected to a first device and a second device, the first device is configured to process status data of a first object comprised in a real scene, the first object is an environmental object or an item in the real scene, the second device is configured to process a virtual scene, the virtual scene is displayed in the real scene, and the apparatus comprises:
an obtaining module, configured to obtain the status data that is of the first object and that is sent by the first device; and
a sending module, configured to send the status data of the first object to the second device, wherein the status data of the first object is used for adjusting a second object comprised in the virtual scene, and the second object corresponds to the first object.

19. A virtual scene adjustment apparatus, wherein the apparatus is used in a second device, the second device is connected to a data exchange platform, and the apparatus comprises:
an obtaining module, configured to obtain status data that is of a first object and that is sent by the data exchange platform, wherein the first object is an environmental object in a real scene or an item comprised in the real scene; and
an adjustment module, configured to adjust, based on the status data of the first object, a second object comprised in a virtual scene, wherein the second object corresponds to the first object, and an adjusted virtual scene is used for being displayed in the real scene.

20. A computing device cluster, wherein the computing device cluster comprises at least one computing device, and each computing device comprises a processor and a memory, wherein
the memory is configured to store instructions; and
the processor is configured to cause, based on the instructions, the computing device cluster to perform the method according to any one of claims 1 to 9, or perform the method according to any one of claims 10 to 17.

21. A computer-readable storage medium, wherein the computer-readable storage medium stores instructions, and when the instructions are run on a computing device, the computing device is caused to perform the method according to any one of claims 1 to 9, or perform the method according to any one of claims 10 to 17.

22. A computer program product comprising instructions, wherein when the instructions are run on a computing device, the computing device is caused to perform the method according to any one of claims 1 to 9, or perform the method according to any one of claims 10 to 17.
